Europäisches Patentamt

European Patent Office

Office européen des brevets

(11) Publication number: **0 089 117
B1**

# (12) EUROPEAN PATENT SPECIFICATION

(45) Date of publication of patent specification: **20.08.86**

(21) Application number: **83300787.5**

(22) Date of filing: **16.02.83**

(51) Int. Cl.⁴: **G 01 F 1/32**, G 01 F 1/68

(54) Flow meter utilizing Karman vortices.

(30) Priority: **10.03.82 JP 34121/82**

(43) Date of publication of application:
**21.09.83 Bulletin 83/38**

(45) Publication of the grant of the patent:
**20.08.86 Bulletin 86/34**

(84) Designated Contracting States:
**DE FR GB**

(56) References cited:
**EP-A-0 019 206
US-A-3 680 375
US-A-3 691 830
US-A-3 996 796**

(73) Proprietor: **MITSUBISHI DENKI KABUSHIKI KAISHA
2-3, Marunouchi 2-chome Chiyoda-ku
Tokyo 100 (JP)**

(72) Inventor: **Otani, Hichiro c/o Himeji Works
Mitsubishi Denki K.K. 840, Chiyoda-cho
Himeji Hyogo Prefecture (JP)**

(74) Representative: **Lawson, David Glynne et al
MARKS & CLERK 57-60 Lincoln's Inn Fields
London WC2A 3LS (GB)**

The file contains technical information
submitted after the application was filed and
not included in this specification

Courier Press, Leamington Spa, England.

Description

The present invention relates to a flow meter utilizing Karman vortices.

A current meter utilizing Karman vortices produces frequency signals substantially proportional to fluid flow quantity or fluid velocity. When a vortex generator or body for producing the Karman vortex street is introduced into the fluid flow to be measured, vortices are stably produced in the downstream fluid. Together with the production of the vortices a regular flow change occurs around the vortex generator and in order to detect such a change in flow various means have been used such as detecting pressure changes, changes in flow velocity, changes in the propagation of ultrasonic waves, changes in heat dissipation of a thermo-sensitive element, etc.

In this case, if the sensor for producing electrical signals corresponding to the vortex frequencies is not located at an appropriate position it is impossible to obtain stable frequency signals. In particular, when a heated wire is utilized as a thermo-sensitive element to transform the change in flow rate due to vortices into electrical signals, the heated wire can detect change in flow rate only within a narrow range of positions of the heated wire. Further, since such a heated wire is superior in its response, it is sensitive to flow rate noise signals, being subject to a considerable influence owing to any deviation from a predetermined mounted location. Therefore, it will be apparent that the heated wire should be installed at a position where the change in flow rate signals are most stable.

U.S. Patent No. 3,680,375 discloses a method and apparatus for determining the relative velocity between an object and a fluid stream in which a vortex strut attached to the object is located in the fluid stream so as to generate Karman vortices at a frequency proportional to the relative velocity. In one embodiment a sonic signal transmitting transducer is located on one side of the strut's wake and a sonic signal receiving transducer is located on the other side of the wake.

U.S. Patent No. 3,691,830 discloses a flow meter in which a cylindrical device is immersed in the fluid stream and produces Karman vortices and in which tubes pass through the cylindrical device and supply a quantity of fluid which varies as a function of the pressure on the surface of the cylindrical device and wherein a velocity measuring means such as a hot wire is mounted in one of the tubes to detect the flow through the tube.

None of these patents disclose that hot wires to detect the number of produced Karman vortices should be located at a definite position downstream of the Karman vortex generator relative to the fluid stream as proposed by the present invention.

It is an object of the present invention to provide a flow meter utilizing Karman vortices which can give stable signal changes when the flow rate is to be measured.

It is a further object of the present invention to provide a flow meter utilizing Karman vortices which can also detect analogue signals corresponding to a mean flow rate.

In accordance with the present invention there is provided a flow meter utilizing Karman vortices, comprising a duct (1) for a flow of fluid to be measured, a vortex generator (2) for producing the Karman vortex street disposed within said duct at right angles to the flow of said fluid, and heated wires (11) arranged downstream of said vortex generator (2) at opposite sides of, and on or outside the lines tangential to the width of, said vortex generator, to detect the generated vortices, and are spaced from the vortex generator by at least d/4 where d represents said width of said vortex generator, characterised in that the heated wires (11) are mounted to supports (10) fixedly secured to the vortex generator (2) at the downstream side of the vortex generator.

The fact that the heated wires are mounted on supports fixedly secured to the vortex generator itself, ensures that the detecting wires are always accurately set in the specified optimum position relative to the vortex-generating object. The specified placing of the wires provides the most stable flow rate variation signals as will be explained below.

European patent application A1—19206 discloses a Karman vortex type flow meter. The placing of the detecting wires is said to be arbitrary. Figures 2 and 4 of this document show the wires arranged outside lines tangential to the width of the vortex generator and spaced from it by more than one-quarter the width of the vortex generator. However the document attaches no significance or particular advantages to such placing of the wires, and the wires are mounted separately from the vortex generator, allowing the possibility of position errors.

Features of the present invention will become more readily apparent upon reading the following specification and upon reference to the accompanying drawings, in which:

Fig. 1 is a cross sectional view of conventional flow meter utilizing Karman vortices to illustrate the state of generation of vortices;

Fig. 2 is a partial longitudinal side sectional view of one embodiment of a flow meter utilizing Karman vortices in accordance with the present invention;

Fig. 3 is a cross sectional plan view of the flow meter shown in Fig. 2 taken along the line III—III thereof; and

Fig. 4 is a side elevational view of the flow meter shown in Fig. 2 as viewed from the righthand side.

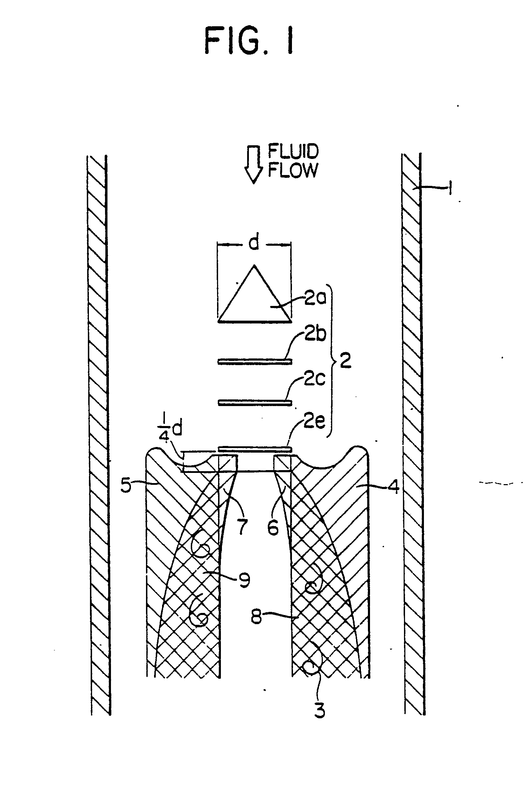

Prior to the description of a preferred embodiment of the present invention a conventional flow meter utilizing Karman vortices will be described with reference to Fig. 1 of the attached drawings wherein a vortex generator for producing the Karman vortex street and the flow conditions of the fluid around it are shown. A duct 1 through which flows a fluid to be measured in the direction indicated by the arrow, contains a vortex generator 2 for producing the Karman vortex street, comprising a vortex producing bar 2a having a width d and vortex amplifying plates 2b, 2c, 2e disposed in series at intervals in the flow direction. In a Karman vortex flow meter such as shown in Fig. 1, when a fluid to be measured flows within duct 1 in the direction indicated by the arrow a regular Karman vortex street 3 is generated downstream of the Karman vortex generator 2. The regions 4, 5, 6, 7, 8 and 9 indicated by the hatched lines in Fig. 1 are the portions where the variation in flow rate corresponding to the frequencies of the generated Karman vortices can be observed. The regions 6 and 7 inside the width d of Karman vortex generator 2 and directly behind the last vortex amplifying plate 2e are the regions wherein maximum flow rate variation signals can be obtained. However, these variation signals also contain a large degree of noise.

In contrast, in regions 4 and 5 which reside outside the width d of vortex generator 2 the noise signals superimposed on the flow rate variation signals become smaller, but the obtainable flow rate variation signals become smaller because of the rapidity of the flow rate of the main flow.

In short the flow rate variation signals get smaller as one goes gradually further back or outside the regions 6, 7 directly behind vortex amplifying plate 2e and within width d of vortex generator 2, and the noise signals superimposed on the variation signals also become smaller.

It has been confirmed by experiments, etc., that the regions wherein the most stable flow rate variation signals are obtainable are regions 8 and 9, rather than regions 4 and 5 which are outside the width d of vortex generator 2. These regions 8 and 9 are outside the width d of vortex generator 2 and are behind the last vortex amplifying plate 2e by more than 1/4 d. Of course, the directions of variation in the flow rate at regions 4, 6, 8 and 5, 7, 9 are in a reverse phase relative to each other and they are geometrically symmetrical to the center line of duct 1.

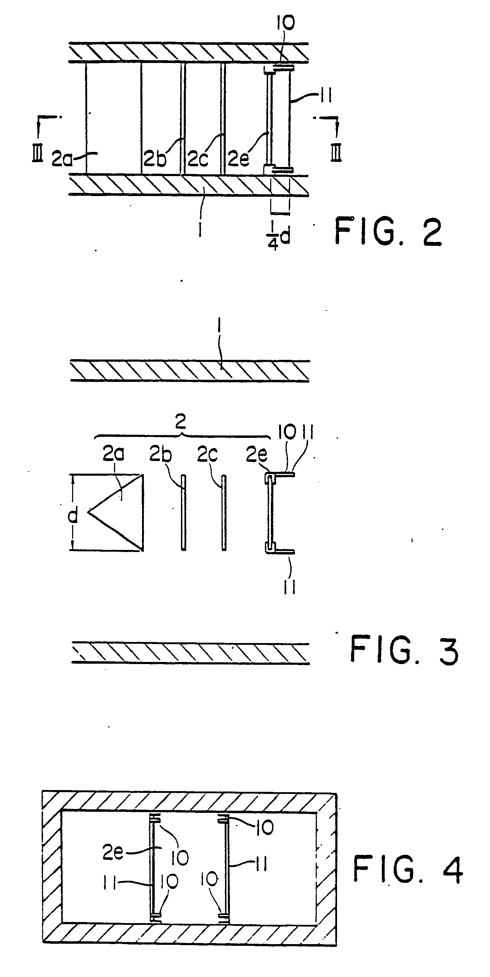

The principle of the present invention resides in the above observation results. Figs. 2 to 4 illustrate one embodiment of the invention.

Fig. 2 shows a heated wire 11 for detecting the Karman vortices and numerals 10 are supports to mount wires 11 in a tensioned state. Supports 10 are arranged, as shown in Figs. 3 and 4, at an interval, transverse to the flow direction, somewhat wider than the width d of the last vortex amplifying plate 2e. Heated wires 11 are mounted to the supports 10 downstream of the last vortex amplifying plate 2e by 1/4 d and on or outside the lines tangential to the width d of vortex generator 2. Therefore, the mounting positions of wires 11 are in the regions 8 and 9 shown in Fig. 1, and therefore in the portions wherein the most stable measurement is possible. As a result, in accordance with the present invention stable detection of the vortices is possible, and, at the same time, since the wires 11 are positioned in the main flow of the fluid to be measured the detection of analogue signals corresponding to the main flow rate also becomes possible.

As shown in Figures 2 and 3, the supports 10 for the heated wires 11 are attached to the final amplifying plate 2e of the vortex generator ensuring that the wires are always accurately positioned relative to the vortex generator.

Alternatively, the wires 11 may be mounted downstream of vortex generator 2 in a V- or N-shaped or zig-zag configuration. In this case, it is necessary that the one side or several sides of heat wires 11 thus mounted are spaced from the last vortex amplifying plate by at least 1/4 d and are on or outside the width d of the vortex generator.

Further, it may be possible that one or more pairs of heated wires 11 may be mounted downstream of the vortex generator 2 and that the spacing between the mounted wires 11 is equal to or greater than the width d of the said vortex generator. Also in this case the wires 11 are spaced from the last surface of the vortex generator by over 1/4 d and are mounted to supports on or outside the lines tangential to the width d of the vortex generator.

Although a single preferred embodiment of the present invention has been described and illustrated, it will be understood by those skilled in the art that modifications may be made in the tructure, form and relative arrangement of parts without departing from the scope of the present claims.

**Claims**

1. A flow meter utilizing Karman vortices, comprising a duct (1) for flow of fluid to be measured, a vortex generator (2) for producing the Karman vortex street disposed within said duct at right angles to the flow of said fluid, and heated wires (11) arranged downstream of said vortex generator (2) at opposite sides of, and on or outside the lines tangential to the width of, said vortex generator, to detect the generated vortices, and are spaced from the vortex generator by at least d/4 where d represents said width of said vortex generator, characterised in that the heated wires (11) are mounted to supports (10) fixedly secured to the vortex generator (2) at the downstream side of the vortex generator.

2. A flow meter as claimed in claim 1 characterised in that said heated wires (11) are mounted to the supports (10) in a V- or N-like or zig-zag configuration.

3. A flow meter as claimed in claim 1 characterised in that the heated wires are mounted at the downstream side of said vortex generator in one or more pairs and the spacing between said heated wires is equal to or greater than said width d of said vortex generator.

4. A flow meter as claimed in claim 1, 2 or 3, characterised in that the vortex generator, at its downstream extremity, comprises a plane surface (2e) at right angles to the direction of flow.

5. A flow meter as claimed in claim 4, characterised in that the vortex generator comprises a vortex-producing bar (2a), and vortex-amplifying plates (2b, 2c, 2e) spaced downstream of the bar.

## Patentansprüche

1. Strömungsmesser unter Verwendung von Karman'schen Wirbeln, mit einer Leitung (1) für die zu messende Fluidströmung, mit einem Wirbelerzeuger (2) zur Erzeugung der Karman'schen Wirbelstraße, der in der Leitung unter rechten Winkeln zur Strömung des Fluids angeordnet ist, und mit Heizdrähten (11), die stromabwärts vom Wirbelerzeuger (2) auf gegenüberliegenden Seiten des und auf den oder außerhalb der Linien tangential zur Breite des Wirbelerzeugers angeordnet sind, um die erzeugten Wirbel zu messen, und die von dem Wirbelerzeuger um mindestens d/4 beabstandet sind, wobei *d* die Breite des Wirbelerzeugers bezeichnet, dadurch gekennzeichnet, daß die Heizdrähte (11) an Trägern (10) angebracht sind, die fest am Wirbelerzeuger (2) auf der stromabwärtigen Seite des Wirbelerzeugers befestigt sind.

2. Strömungsmesser nach Anspruch 1, dadurch gekennzeichnet, daß die Heizdrähte (11) an den Trägern (10) in einer V-förmigen oder N-förmigen oder einer Zick-Zack-Konfiguration angebracht sind.

3. Strömungsmesser nach Anspruch 1, dadurch gekennzeichnet, daß die Heizdrähte an der stromabwärtigen Seite des Wirbelerzeugers in einem oder mehreren Paaren montiert sind und daß der Abstand zwischen den Heizdrähten gleich der oder größer als die Breite *d* des Wirbelerzeugers ist.

4. Strömungsmesser nach Anspruch 1, 2 oder 3, dadurch gekennzeichnet; daß der Wirbelerzeuger an seinem stromabwärtigen Ende eine ebene Oberfläche (2e) unter rechten Winkeln zur Strömungsrichtung aufweist.

5. Strömungsmesser nach Anspruch 4, dadurch gekennzeichnet, daß der Wirbelerzeuger eine Wirbel erzeugende Stange (2a) und Wirbel verstärkende Platten (2b, 2c, 2e) im Abstand und stromabwärts von der Stange aufweist.

## Revendications

1. Débitmètre utilisant des vortices de Karman, comprenant une gaine (1) pour l'écoulement du fluide à mesurer, un générateur de tourbillons (2) pour produire la rue des vortices de Karman disposé dans ladite gaine à angle droit par rapport à l'écoulement dudit fluide, et des fils métalliques chauffés (11) agencés en aval dudit générateur de tourbillons (2) à ses côtés opposés, et sur ou en-dehors des lignes tangentielles à la largeur dudit générateur de tourbillons pour détecter les tourbillons produits, et qui sont espacés du générateur de tourbillons d'au moins d/4 où *d* représente ladite largeur dudit générateur de tourbillons, caractérisé en ce que les fils métalliques chauffés (11) sont montés à des supports fixés solidement au générateur de tourbillons (2) du côté aval du générateur de tourbillons.

2. Débitmètre selon la revendication 1 caractérisé en ce que lesdits fils métalliques chauffés (11) sont montés sur les supports (10) en configuration en V ou en N ou en zig-zag.

3. Débitmètre selon la revendication 1 caractérisé en ce que les fils métalliques chauffés sont montés du côté aval dudit générateur de tourbillons en une ou plusieurs paires et en ce que l'espace entre lesdits fils métalliques chauffés est égal à ou supérieur à ladite largeur *d* dudit générateur de tourbillons.

4. Débitmètre selon la revendication 1, 2 ou 3 caractérisé en ce que le générateur de tourbillons, à son extrémité située en aval, comprend une surface plane (2e) à angle droit avec la direction d'écoulement.

5. Débitmètre selon la revendication 4 caractérisé en ce que le générateur de tourbillons comprend une barre productrice de tourbillons (2a) et des plaques amplificatrices de tourbillons (2b, 2c, 2e) espacées en aval de la barre.

# FIG. 1

FIG. 2

FIG. 3

FIG. 4

2